# EUROPÄISCHE PATENTSCHRIFT

(11) **EP 0 777 712 B1**
(45) Veröffentlichungstag und Bekanntmachung des Hinweises auf die Patenterteilung: **14.02.2001**
(21) Anmeldenummer: 95929860.5
(22) Anmeldetag: 12.08.1995
(51) Int. Cl.: C10L 1/14, C08L 23/08, C08L 23/36, C08F 8/32

(54) **POLYMERMISCHUNGEN UND IHRE VERWENDUNG ALS ZUSATZ FÜR ERDÖLMITTELDESTILLATE**
POLYMER MIXTURES AND THEIR USE AS ADDITIVES FOR PETROLEUM MIDDLE DISTILLATES
MELANGES POLYMERES ET LEUR UTILISATION COMME ADDITIFS POUR DISTILLATS MOYENS DE PETROLE

(30) Priorität: 26.08.1994 DE 4430294
(43) Veröffentlichungstag der Anmeldung: 11.06.1997
(73) Patentinhaber: BASF AKTIENGESELLSCHAFT, 67056 Ludwigshafen (DE)
(72) Erfinder: DRALLE-VOSS, Gabriele, D-64297 Darmstadt (DE); OPPENLÄNDER, Knut, D-67061 Ludwigshafen (DE); WENDEROTH, Bernd, D-69488 Birkenau (DE); FAUL, Dieter, D-67150 Niederkirchen (DE); KASEL, Wolfgang, D-69226 Nussloch (DE)
(86) Internationale Anmeldenummer: EP9503207
(87) Internationale Veröffentlichungsnummer: WO9606902

(56) Entgegenhaltungen:
- EP-A- 0 290 088
- EP-A- 0 320 766
- EP-A- 0 455 206
- FR-A- 2 567 536
- FR-A- 2 592 387
- GB-A- 2 261 441
- US-A- 4 416 668

## Beschreibung

Die Erfindung betrifft Polymermischungen, enthaltend
a) 10 bis 90 Gew.-% eines Imides aus einem Copolymerisat, welches ausschließlich aus einem α-Olefin und einer ethylenisch ungesättigten Dicarbonsäure aufgebaut ist, und einem Polyamin und
b) 10 bis 90 Gew.-% eines von a) verschiedenen Copolymerisats, welches mindestens zwei Monomere aus der Gruppe bestehend aus Ethylen, Acrylestern, Vinylestern, Vinylethern und ethylenisch ungesättigten Dicarbonsäuren oder Dicarbonsäurederivaten enthält,
und ihre Verwendung als Zusatz für Erdölmitteldestillate.

Mitteldestillate wie Gasöle, Dieselkraftstoffe oder Heizöle, die durch Destillation aus Erdölen gewonnen werden, haben je nach Herkunft des Rohöls unterschiedliche Gehalte an Paraffinen. Bei tieferen Temperaturen kommt es zur Ausscheidung fester Paraffine (Trübungspunkt oder Cloud Point, CP). Bei weiterer Abkühlung bilden die plättchenförmigen n-Paraffinkristalle eine "Kartenhausstruktur" und das Mitteldestillat stockt, obwohl der überwiegende Teil des Mitteldestillats noch flüssig ist. Durch die ausgefallenen n-Paraffine im Temperaturbereich zwischen Trübungspunkt und Stockpunkt (Pour Point) wird die Fließfähigkeit der Erdöldestillat-Kraftstoffe erheblich beeinträchtigt. Die Paraffine verstopfen Filter und verursachen eine ungleichmäßige oder völlig unterbrochene Kraftstoffzufuhr zu den Verbrennungsaggregaten. Ähnliche Störungen treten bei Heizölen auf.

Es ist seit langem bekannt, daß durch geeignete Zusätze das Kristallwachstum der Paraffine in den Erdölmitteldestillat-Brenn- und Kraftstoffen modifiziert werden kann. Gut wirksame Additive verhindern, daß Mitteldestillate derartige Kartenhaus-Strukturen ausbilden und bei Temperaturen wenige Grad Celsius unterhalb der Temperatur, bei welcher die ersten Paraffinkristalle auskristallisieren, bereits fest werden. Es werden stattdessen feine, gut kristallisierte, separate Paraffinkristalle gebildet, welche Filter in Kraftfahrzeugen und Heizungsanlagen passieren oder zumindest einen für den flüssigen Teil der Mitteldestillate durchlässigen Filterkuchen bilden, so daß ein störungsfreier Betrieb sichergestellt ist.

Ein Nachteil dieser Additive beruht darin, daß die ausgefallenen Paraffinkristalle aufgrund ihrer gegenüber dem flüssigen Teil höheren Dichte dazu neigen, sich beim Lagern mehr und mehr am Boden des Behälters abzusetzen. Dadurch bildet sich im oberen Behälterteil eine homogene paraffinarme Phase und am Boden eine zweiphasige paraffinreiche Schicht. Da sowohl in Fahrzeugtanks als auch in Lager- oder Liefertanks der Mineralölhändler der Abzug des Mitteldestillates meist wenig oberhalb des Behälterbodens erfolgt, besteht die Gefahr, daß die hohe Konzentration an festen Paraffinen zu Verstopfungen von Filtern und Dosiereinrichtungen führt. Diese Gefahr wird um so größer, je weiter die Lagertemperatur die Ausscheidungstemperatur der Paraffine unterschreitet, da die ausgeschiedene Paraffinmenge mit sinkender Temperatur ansteigt.

Bei den Paraffinkristallmodifikatoren, den sog. Fließverbesserern oder Paraffindispergatoren, handelt es sich im allgemeinen um·Polymere, die durch Co-Kristallisation (Interaktion) das Kristallwachstum der n-Paraffine verändern und die Fließeigenschaften des Mitteldestillats bei niedrigen Temperaturen verbessern. Die Wirksamkeit der Fließverbesserer wird nach DIN EN 116 indirekt durch Messung des "Cold Filter Plugging Point" (CFPP) ausgedrückt.

Als Fließverbesserer werden seit langem Ethylen-Vinylcarboxylat-Copolymere eingesetzt, wie sie z.B. aus der US-A-3 048 479 und US-A-3 627 838 bekannt sind.

Aus der US-A-3 471 458 sind alternierende Copolymere von Maleinimiden und Olefinen mit mindestens 8 Kohlenstoffatomen bekannt, die als Dispergatoren und Detergentien in Brennstoffen eingesetzt werden. Die alternierenden Copolymere bestehen insbesondere aus aliphatischen 1-Olefinen mit 8 bis 30 Kohlenstoffatomen und N-substituierten Maleinimiden, worin die die Imidgruppierung bildenden Reste nichtaromatisch sind uhd 3 bis 60 Kohlenstoffatome und 1 bis 5 Aminostickstoffatome enthalten, wobei das Copolymer von 4 bis 20 Wiederholungseinheiten aufweist.

In der US-A-3 471 458 ist die Imidgruppe insbesondere ein Rest der Formel

-(CH₂)ₘ-NH-Cₓ

wobei Cₓ eine Alkylgruppe mit x = 8 bis 20 C-Atomen und m = 2 oder 3 ist.

In der DE-C-31 37 233 sind Zusammensetzungen zur Verbesserung der Kaltfiltrierbarkeit von mittleren Erdölabschnitten mit einem Destillationsbeginn von 200 bis 230°C und einem Destillationsende von 390 bis 450°C (nach ASTM) geschützt, die enthalten:
(A) ein übliches Polyethylen oder ein übliches Copolymer aus Ethylen und Vinylacetat mit einer mittleren Molekülmasse (Zahlenmittel) von 500 bis 4000 und
(B) ein Kondensationsprodukt von Maleinsäure- oder Bernsteinsäureanhydrid mit einem linearen N-Alkyl-1,3-diaminopropan der allgemeinen Formel

   R-NH-CH₂-CH₂-CH₂-NH₂

   worin R gesättigtes oder ungesättigtes C₁₀₋₂₂-Alkyl bedeutet, wobei das Massenverhältnis A : B 1 : 20 bis 20 : 1 beträgt.

In der EP-B-0 320 766 sind Polymermischungen aus einem Copolymer (A₁) aus 10-60 Gew.-% Vinylacetat und 40-90 Gew.-% Ethylen oder einem Copolymer (A₂) aus 15-50 Gew.-% Vinylacetat, 0,5-20 Gew.-% C₆-C₂₄-α-Olefin und 30-70 Gew.-% Ethylen und einem Copolymer (B) aus 10-90 Gew.-% C₆-C₂₄-α-Olefin und 10-90 % N-C₆-C₂₂-Alkylmaleinsäureimid, wobei das Mischungsverhältnis der Copolymeren (A₁) oder (A₂) zu (B) 100:1 bis 1:1 beträgt, beschrieben. Diese dienen der Verbesserung der Fließfähigkeit von Mineralöldestillaten in der Kälte.

Aus der FR-A 2 592 387 ist bekannt, Mischungen aus Terpolymerisaten, beispielsweise aus langkettigen α-Olefinen, Vinylacetat und Maleinsäureanhydrid, welche mit langkettigen primären Aminen imidiert worden sind, und Ethylen-Copolymeren als Additive in Mineralöldestillaten einzusetzen.

Es bestand die Aufgabe, Copolymerisate zur Verfügung zu stellen, die die Fließfähigkeit von Erdölmitteldestillaten bei tiefer Temperatur gewährleisten, indem sie eine solche Dispergierwirkung haben, daß ein Absetzen ausgeschiedener Paraffine verzögert oder verhindert wird. Diese Wirkung soll unabhängig von der Zusammensetzung der Erdölmitteldestillate sein.

Demgemäß wurden die eingangs definierten Polymermischungen gefunden.

Gegenstand der Erfindung ist außerdem die Verwendung dieser Polymermischungen als Zusatz für Erdölmitteldestillate sowie diese Polymermischungen enthaltende Erdölmitteldestillate.

Die erfindungsgemäßen Polymermischungen enthalten als wesentlichen Bestandteil 10 bis 90 Gew.-%, vorzugsweise 20 bis 75 Gew.-% und besonders bevorzugt 25 bis 60 Gew.-% eines Imides aus einem Copolymerisat aus einem α-Olefin und einer ethylenisch ungesättigten Dicarbonsäure und einem Polyamin (Komponente a), die im folgenden auch Copolymerisat a) genannt wird).

Die Copolymerisate a) haben im allgemeinen ein gewichtsmittleres Molekulargewicht von 200 bis 50 000, vorzugsweise von 500 bis 20 000. Die Copolymerisate a) enthalten vorzugsweise 30 bis 70 mol-%, besonders bevorzugt 40 bis 60 mol-%, α-Olefin und 30 bis 70 mol-%, besonders bevorzugt 40 bis 60 mol-%, jeweils bezogen auf a), Imid aus einer ethylenisch ungesättigten Dicarbonsäure und einem Polyamin. Ganz besonders bevorzugt ist ein alternierendes Copolymerisat mit gleichen molaren Anteilen an Imid und α-Olefin.

Im allgemeinen werden verzweigte oder geradkettige α-Olefine der allgemeinen Formel III 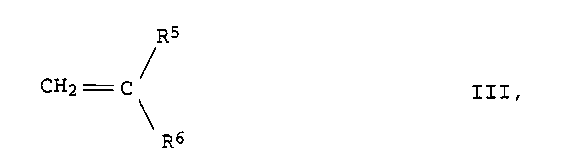 worin R⁵ Wasserstoff oder einen C₁-C₁₀-Alkylrest und R⁶ einen Alkyl-, Alkenyl- oder Arylrest bedeutet, eingesetzt. Geeignet sind beispielsweise α-Olefine wie 1-Buten, 1-Hexen, 1-Octen, 1-Decen, 1-Dodecen, 1-Tetradecen, 1-Hexadecen, 1-Octadecen oder Gemische von 1-Alkenen mit 20 - 24 oder 24 - 28 C-Atomen oder längerkettige Polyethylenabkömmlinge mit endständiger CC-Doppelbindung. Auch endständig ungesättigte polymere Propen-, Buten-und Isobuten-Derivate sind geeignet. Weiterhin kommen Aryl-substituierte Olefine wie z.B. Styrol in Frage.

Bevorzugt sind α-Olefine mit Kettenlängen von C₁₂ bis C₄₀, insbesondere geradkettige α-Olefine mit Kettenlängen von C₁₂ bis C₂₈ und vor allem solche mit Kettenlängen von C₁₆ bis C₂₄.

Erfindungsgemäß ganz besonders bevorzugt werden C₂₀₋₂₄-α-Olefine verwendet. Hierbei handelt es sich im allgemeinen um Mischungen von α-Olefinen, die zu über 80 Gew.-% aus α-Olefinen mit 20 bis 24 Kohlenstoffatomen bestehen.

Als den Copolymerisaten a) zugrundeliegende ethylenisch ungesättigte Dicarbonsäuren eignen sich beispielsweise monoethylenisch ungesättigte Dicarbonsäuren mit 4 bis 8 C-Atomen, z.B. Maleinsäure, Itaconsäure, Mesaconsäure, Citraconsäure und Methylenmalonsäure. Von den genannten Säuren sind Maleinsäure und Itaconsäure bevorzugt, wobei Maleinsäure ganz besonders bevorzugt ist.

Für die Herstellung der Imide lassen sich naturgemäß neben den Dicarbonsäuren auch die entsprechenden Dicarbonsäureester bzw. Dicarbonsäureanhydride verwenden.

Die erfindungsgemäß hierfür bevorzugten ethylenisch ungesättigten Dicarbonsäuren oder Dicarbonsäurederivate lassen sich in der allgemeinen Formel III zusammenfassen, 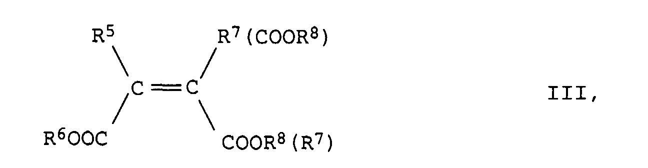 worin R⁵ bis R⁸ unabhängig voneinander Wasserstoff oder einen gegebenenfalls Heteroatome enthaltenden C₁-C₂₂-Alkylrest bedeuten, wobei es sich im Falle von cis-Dicarbonsäuren der Formel III (R⁶=R⁸=H) auch um deren Säureanhydride handeln kann.

In der Regel ist es von Vorteil, die Dicarbonsäurederivate in Form der Anhydride bei der Copolymerisation einzusetzen. Die Anhydridgruppen der zunächst gebildeten Copolymerisate können dann direkt mit den Polyaminen umgesetzt werden.

Beispiele hierfür sind Maleinsäureanhydrid, Itaconsäureanhydrid, Citraconsäureanhydrid, Methylenmalonsäureanhydrid.

Polyamine im Sinne der Erfindung sind Amine, die mindestens zwei Stickstoffatome enthalten.

Bevorzugt werden erfindungsgemäß Polyamine der Formel I, 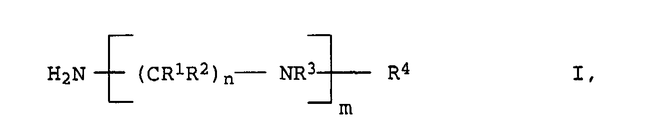 worin
- n: 1 bis 6;
- m: 1 bis 3;
- R¹ und R²: unabhängig voneinander Wasserstoff, Methyl, Ethyl;
- R³: Wasserstoff, Alkenyl, Alkyl, Aryl und
- R⁴: Wasserstoff, Alkyl, Alkenyl, Aryl, aminhaltiges Alkenyl oder aminhaltiges Alkyl bedeuten,
verwendet.

Beispiele für erfindungsgemäß geeignete Polyamine der Formel I sind
N-Cyclohexylpropylendiamin-1,3; N-2-Ethylhexylpropylendiamin-1,3; N-Dodecyl-1,3-Propylendiamin; N-Stearylpropylendiamin-1,3; N-Oleylpropylendiamin-1,3; N-3-Aminopropyltalgfettamin; N-Archedylpropylendiamin-1,3; N-Behenylpropylendiamin-1,3; N-Benzyl-propylendiamin-1,3; N-Phenylpropylendiamin-1,3; 2-Aminoethylstearylamin; 2-Aminoethylbehenylamin; 2-Aminoethyloleylamin; 2-Aminoethyltalgfettamin; N-Stearylbishexamethylendiamin-1,6; N-Stearyldipropylentriamin; N-Dodecyldipropylentriamin; N,N-Dimethylaminopropylamin-1,3; N,N-Ditridecylpropylendiamin-1,3; N,N-Bis(2-Ethylhexyl)-3-Aminopropylenamin; Bis-aminopropyltalgfettamin; Bis-aminopropyllaurylamin, 1-(2-Aminopropyl)-stearylamin; 1-(2-Aminopropyl)-piperazin; N-2-Aminoethyl-piperidin; N-3-Aminopropylimidazol.

Besonders bevorzugt werden erfindungsgemäß Polyamine der Formel II,

R⁴-NH-CH₂-CH₂-CH₂-NH₂ II,

worin R⁴ die Bedeutung Alkyl, Alkenyl, Aryl, aminhaltiges Alkyl, aminhaltiges Alkenyl oder Wasserstoff hat, verwendet. Von diesen ist N-Talgfett-1,3-diaminopropan besonders geeignet.

N-Talgfett-1,3-diaminopropan ist hierbei insbesondere eine Mischung von Diaminen der Formel II, die sich im Alkylrest R⁴ unterscheiden. Die Alkylreste weisen näherungsweise eine Verteilung (in Gew.-%) von 1 % C₁₂, 3 % C₁₄, 30 % C₁₆, 25 % C₁₈, 40 % C₁₈, (mit einer Doppelbindung) und 1 % C₂₀₋₂₂ auf.

In einer bevorzugten Ausführungsform der Erfindung ist Komponente a) das Imid, welches sich von einem C₂₀-C₂₄-α-Olefin/Maleinsäureanhydrid-Copolymerisat und einem Polyamin ableitet.

Die in den Copolymerisaten a) enthaltenen sekundären oder tertiären Amingruppen können auch in quaternierter Form vorliegen, z.B. durch Umsetzung der Imide mit anorganischen oder organischen Säuren oder durch Alkylierung mit bekannten Alkylierungsreagenzien. Mit Alkylierung sei hierbei insbesondere die Einführung einer Alkyl-, Alkenyl- oder Hydroxyalkylgruppe gemeint. Entsprechende Gegenionen wären beispielsweise die Anionen einer organischen oder anorganischen Säure, z.B. CH₃OSO₃⁻, SO₄²⁻ oder Alk(en)yl-CO₂^{⊖}.

Die erfindungsgemäßen Polymermischungen enthalten als weiteren wesentlichen Bestandteil 10 bis 90 Gew.-%, vorzugsweise 25 bis 80 Gew.-% und besonders bevorzugt 40 bis 75 Gew.-% eines Copolymerisats, welches mindestens zwei Monomere aus der Gruppe, bestehend aus Ethylen, Acrylestern, Vinylestern, Vinylethern und ethylenisch ungesättigten Dicarbonsäuren oder Dicarbonsäurederivate enthält (Komponente b).

Die erfindungsgemäßen Copolymerisate der Komponente b) können beispielsweise 10 bis 90 Mol-%, vorzugsweise 15 bis 45 Mol-% mindestens eines Acrylesters, eines Vinylesters, eines Vinylethers, einer ethylenisch ungesättigten Dicarbonsäure oder eines Dicarbonsäurederivates einpolymerisiert enthalten.

Derartige Copolymerisate sind z.B. in DE-A-19 14 756 und EP-A-486 836 (Ethylen-Vinylester-Copolymerisate und deren Mischung mit anderen Copolymeren), EP-A-214 876 (α-Olefin-Maleinsäureanhydrid-Copolymerisate) oder EP-A-155 807 (Alkylfumarat-Vinylacetat-Copolymere) beschrieben.

Zusätzlich können die Copolymerisate b) noch weitere Comonomere enthalten.

Bevorzugt wird als Komponente b) ein Copolymer verwendet, welches mindestens die Monomeren Ethylen und Vinylester enthält. Besonders bevorzugt wird als Komponente b) ein Ethylen/Vinylpropionat-Copolymer verwendet.

Die Herstellung der Komponenten a) und b) erfolgt im allgemeinen durch Copolymerisation in an sich bekannter Weise in inerten organischen Lösungsmitteln unter radikalischen Bedingungen. Geeignet sind insbesondere Lösungsmittel, welche praktisch nicht in die Polymerisation eingreifen und nicht mit den Monomeren reagieren. Solche Lösungsmittel, die alleine oder in Mischung verwendet werden können, sind beispielsweise Aceton, Methylethylketon, Diethylketon, Cyclohexanon, Tetrahydrofuran, Dioxan, Ethylacetat, Propionsäureethylester, aromatische Kohlenwasserstoffe, wie Benzol, Toluol, Xylol, Cumol, Tetralin, Solvent Naphtha (z.B. Solvesso®150), aliphatische Kohlenwasserstoffe, wie Pentan, Hexan, Heptan, Octan, Isooctan, Cyclohexan, Decalin, Shellsol®D70, halogenierte aliphatische Kohlenwasserstoffe, wie Dichlormethan, Dichlorethan, Trichlorethan.

Solvesso®150 ist die Bezeichnung der Fa. EXXON Chemical GmbH für eine aromatische Lösungsmittelfraktion vom Siedeintervall 187 bis 203°C. Es enthält ca. 99 % Aromaten. Shellsol®D70 ist die Bezeichnung der Fa. Shell für ein entaromatisiertes, aliphatisches Kohlenwasserstoffgemisch vom Siedeintervall 195 bis 245°C.

Vorzugsweise verwendet man als Lösungsmittel Aceton, Methylethylketon, Toluol, Xylol, Tetralin, Decalin, Solvent Naphtha (z.B. Solvesso® 150) oder Shellsol®D70.

Die Copolymerisationen erfolgen in der Regel in Gegenwart von Verbindungen, die unter den Polymerisationsbedingungen in Radikale zerfallen. Geeignete Polymerisationsinitiatoren sind beispielsweise Wasserstoffperoxid, organische Peroxide und Hydroperoxide, Azoverbindungen und Peroxodisulfate. Die Polymerisation kann auch durch Einwirkung energiereicher Strahlung oder durch Bestrahlung des Reaktionsgemisches in Gegenwart eines Photoinitiators, wie beispielsweise Benzoin, vorgenommen werden.

Die Initiatoren sollen vorzugsweise bei den gewählten Polymerisationstemperaturen eine Halbwertszeit von < 3 Std. besitzen. Vorzugsweise werden als Polymerisationsinitiatoren tert.-Butylperpivalat, Dilaurylperoxid, tert.-Butyl-per-2-ethylhexanoat (^{t}Butylperoctoat), tert.-Butylperbenzoat, Dicumylperoxid, Di-tert.-butylperoxid und 2,2'-Azobis(2-methylpropionitril), alleine oder in Mischung, eingesetzt. Durch die Mitverwendung von Redox-Coinitiatoren, wie beispielsweise Benzoin oder Dimethylanilin sowie von organisch löslichen Komplexen oder Salzen von Schwermetallen, wie Kupfer, Kobalt, Mangan, Eisen, Nickel, Chrom, können die Halbwertzeiten der genannten Peroxide verringert werden.

Die in Radikale zerfallenden Polymerisationsinitatoren werden in üblichen Mengen eingesetzt, z.B. 0,1 bis 5,0 Gew.-%, bezogen auf die bei der Polymerisation verwendeten Mengen an Monomeren.

Die jeweilige Copolymerisation kann ggf. in Gegenwart von üblichen Reglern, wie Mercaptoethanol, Mercaptopropanol, Mercaptoessigsäure, Mercaptopropionsäure, Thiomilchsäure, n-Butylmercaptan, ^{t}Butylmercaptan, Octylmercaptan und Dodecylmercaptan durchgeführt werden. Weitere geeignete Regler sind Aldehyde, wie Acetaldehyd, Propionaldehyd und Butyraldehyd sowie Ameisensäure.

Die Polymerisation wird vorzugsweise in Rührkesseln durchgeführt, die beispielsweise mit einem Anker-, Blatt- oder Impellerrührer ausgestattet sind. Die Copolymerisation kann beispielsweise als Lösungs-, Fällungs- oder Suspensionspolymerisation durchgeführt werden. Bei der Fällungs- und Suspensionspolymerisation kann es vorteilhaft sein, zusätzlich in Gegenwart von Schutzkolloiden zu polymerisieren. Geeignete Schutzkolloide sind beispielsweise Copolymerisate aus Maleinsäureanhydrid und Vinylalkylethern, die 1 bis 20 Kohlenstoffatome in der Alkylgruppe enthalten, oder Copolymerisate aus Maleinsäureanhydrid und Olefinen mit 8 bis 20 Kohlenstoffatomen sowie deren Monoester mit C₁₀- bis C₂₀-Alkoholen oder Monoamide mit C₁₀- bis C₂₀-Aminen. Außerdem eignen sich Polyalkylvinylether, deren Alkylgruppe 1 bis 20 Kohlenstoffatome enthält, z.B. Polymethyl-, Polyethyl- und Polyisobutylvinylether. Falls bei der Copolymerisation ein Schutzkolloid eingesetzt wird, so betragen die wirksamen Mengen 0,05 bis 4,0 Gew.-%, bezogen auf die zu polymerisierenden Monomeren.

Die Konzentration der Monomeren in den inerten organischen Lösungen beträgt im allgemeinen 5 bis 80, vorzugsweise 15 bis 60 Gew.-%. Die Polymerisationstemperatur liegt in der Regel im Bereich von 40 bis 240°C, vorzugsweise 80 bis 180°C.

Nach Beendigung der Polymerisation können die Copolymerisate isoliert werden, z.B. durch Abdestillieren des bei der Polymerisation verwendeten Lösungsmittels bzw. durch Ausfällen der Polymeren mit einem geeigneten Lösungsmittel. Die Copolymerisate verbleiben dann als pulverförmiger Rückstand.

Komponente a) ist beispielsweise durch die Polymerisation der erfindungsgemäß geeigneten α-Olefine und ungesättigten Imide in Lösung in Gegenwart von Radikalstartern wie Azobisisobutyronitril zugänglich.

Vorzugsweise werden die Copolymerisate von Komponente a) jedoch durch die Umsetzung der Copolymerisate aus α-Olefin und ethylenisch ungesättigten Dicarbonsäurederivaten mit den Polyaminen erhalten. Das Amin wird dabei in Mengen von ungefähr 1 Mol pro Mol einpolymerisiertem Dicarbonsäurederivat eingesetzt, z.B. 0,8 - 1,2 Mol/Mol. Zur Umsetzung werden das Copolymerisat mit dem Polyamin mit oder ohne Lösungsmittel im allgemeinen für 0,3 bis 30 h auf Temperaturen von 100 bis 180°C erhitzt. Die Lösungsmittel sollten vorzugsweise keine aciden Wasserstoffatome besitzen, die mit den Copolymerisaten reagieren könnten. Bevorzugt eingesetzt werden aromatische Kohlenwasserstoffe, z.B. Toluol, Xylol, Solvent Naphtha oder aliphatische Kohlenwasserstoffe, z.B. Cyclohexan, Decalin, Shellsol® K. Bei Bedarf kann die Reaktion durch saure oder basische Katalysatoren beschleunigt werden, z.B. p-Toluolsulfonsäure, Natriummethylat, Schwefelsäure, phosphorige Säure, Citronensäure, Kalium-tert.-butylat oder Tetrabutylorthotitanat. Während der Reaktion gebildetes Reaktionswasser wird vorzugsweise abdestilliert.

Die Umsetzung zum Imid a) kann IR-spektroskopisch anhand der entstehenden Imidbande bei 1700 cm⁻¹ verfolgt werden.

Komponente b) wird bevorzugt nach einem Hochdruckverfahren im Rohrreaktor ohne Lösungsmittel hergestellt (vgl. DE-C 21 02 469; Seite 2, Zeilen 35 ff.).

Das mittlere Molekulargewicht (Gewichtsmittel) der erfindungsgemäßen Copolymerisate a) beträgt im allgemeinen 200 bis 50 000, vorzugsweise 500 bis 20000, und das der Copolymerisate b) im allgemeinen 500 bis 5000, vorzugsweise 1000 bis 3000.

Die erfindungsgemäßen Polymermischungen können durch einfaches Vermischen der Komponenten a) und b) hergestellt werden.

Die erfindungsgemäßen Polymermischungen finden Verwendung als Zusatz für Erdölmitteldestillate, worunter Petroleum, Heizöl und Dieselkraftstoffe mit einer Siedetemperatur von etwa 150 bis 400°C verstanden werden. Die Polymermischungen können den Mitteldestillaten direkt, bevorzugt aber als 20 bis 70 gew.-%ige Lösung zugesetzt werden. Geeignete Lösungsmittel sind aliphatische oder aromatische Lösungsmittel wie Xylol oder deren Gemische, weiterhin hochsiedende Aromatengemische, sowie Mitteldestillate. Die Menge an Polymermischung in den Erdölmitteldestillaten beträgt in der Regel 10 bis 10 000, vorzugsweise 20 bis 5000 und besonders bevorzugt 50 bis 1000 ppm. Je nach Verwendungszweck können die Mitteldestillate noch weitere Additive wie z.B. Fließverbesserer, Dispergatoren, Anti-Schaum-Mittel, Korrosionsschutzmittel, Antioxidantien, Demulgatoren, Schmierfähigkeitsverbesserer, Leitfähigkeitsverbesserer und/oder Farbstoffe enthalten.

Die erfindungsgemäßen Polymermischungen bewirken in Mitteldestillaten unabhängig von deren Herkunft eine deutliche Verbesserung der Fließeigenschaften in der Kälte, indem sie ausgeschiedene Paraffinkristalle wirksam in der Schwebe halten, so daß es nicht zu Verstopfungen von Filtern und Leitungen durch abgesetztes Paraffin kommt. Sie weisen eine gute Breitenwirksamkeit auf und bewirken so, daß die ausgeschiedenen Paraffinkristalle in unterschiedlichen Mitteldestillaten sehr gut dispergiert werden.

### Beispiele

Die Prozentangaben in den Beispielen beziehen sich jeweils auf das Gewicht.

In den erfindungsgemäßen Beispielen wurden jeweils Polymermischungen aus den Copolymerisaten A1 bis A4 (Komponente a) und Fl, einem Ethylen/Vinylpropionat-Copolymerisat mit ca. 40 Gew.-% Vinylpropionat und einem gewichtsmittleren Molekulargewicht von 2500 (Komponente b) eingesetzt.

In den Vergleichsbeispielen wurden jeweils Polymermischungen aus den Copolymerisaten A5 bis A8 in Kombination mit F1 eingesetzt. Außerdem wurden in zwei weiteren Vergleichsbeispielen die Copolymerisate A1 und F1 jeweils alleine eingesetzt.
A) Herstellung der Copolymerisate A1 bis A4 (Komponente a) sowie der Copolymerisate A7 und A8
Das eingesetzte Maleinsäureanhydrid/C₂₀₋₂₄-α-Olefin-Copolymer enthielt beide Monomeren in gleichen molaren Mengen und hatte ein gewichtsmittleres Molekulargewicht von 10000.
A1) 255 g einer 50%igen Lösung eines Maleinsäureanhydrid/C20,24-Olefin-Copolymeren wurde mit 100,2 g Aminopropyltalgfettamin (Duomeen® T der Fa. Akzo) langsam auf 160°C erwärmt. Unter Stickstoffstrom wurde die Lösung einige Stunden bei dieser Temperatur gerührt und dabei das Kondensationswasser abdestilliert. Nach 2 h betrug die Säurezahl des Produktes 5,4 mg KOH/g. Im IR-Spektrum war deutlich die Imidbande bei 1700 cm⁻¹ zu erkennen. Das erhaltene Produkt wurde mit 75 g Solvesso® 150 verdünnt, so daß der Feststoffgehalt des Produktes 50 % betrug.
A2) 255 g einer 50 %igen Lösung eines Maleinsäureanhydrid/C20,24-Olefin-Copolymeren wurde mit 110 g Aminopropylarachidylbehenylamin (Dinoram® 42 der Fa. CECA) langsam auf 160°C erwärmt. Unter Stickstoffstrom wurde die Lösung einige Stunden bei dieser Temperatur gerührt und dabei das Kondensationswasser abdestilliert. Nach 2 h betrug die Säurezahl des Produktes 6,6 mg KOH/g. Im IR-Spektrum war deutlich die Imidbande bei 1700 cm⁻¹ zu erkennen. Das erhaltene Produkt wurde mit 75 g Solvesso® 150 verdünnt, so daß der Feststoffgehalt des Produktes 52,7 % betrug.
A3) 255 g einer 50 %igen Lösung eines Maleinsäureanhydrid/C 20,24-Olefin-Copolymeren wurde mit 83 g Aminopropyldodecylamin (Duomeen®C der Fa. Akzo) langsam auf 160°C erwärmt. Unter Stickstoffstrom wurde die Lösung einige Stunden bei dieser Temperatur gerührt und dabei das Kondensationswasser abdestilliert. Nach 3 h betrug die Säurezahl des Produktes 4,1 mg KOH/g. Im IR-Spektrum war deutlich die Imidbande bei 1700 cm⁻¹ zu erkennen. Das erhaltene Produkt wurde mit 75 g Solvesso® 150 verdünnt, so daß der Feststoffgehalt des Produktes 50 % betrug.
A4) 255 g einer 50%igen Lösung eines Maleinsäureanhydrid/C20,24-Olefin-Copolymeren wurde mit 103 g Aminopropyloleylamin (Duomeen® O der Fa. Akzo) langsam auf 160°C erwärmt. Unter Stickstoffstrom wurde die Lösung einige Stunden bei dieser Temperatur gerührt und dabei das Kondensationswasser abdestilliert. Nach 2 h betrug die Säurezahl des Produktes 6,2 mg KOH/g. Im IR-Spektrum war deutlich die Imidbande bei 1700 cm⁻¹ zu erkennen. Das erhaltene Produkt wurde mit 75 g Solvesso® 150 verdünnt, so daß der Feststoffgehalt des Produktes 52,9 % betrug.
A5) Vergleichscopolymerisat (a) 30 g einer 50%igen Lösung von A1 wurde mit 2,6 g Dimethylsulfat langsam auf 80°C erwärmt. Die Lösung wurde einige Stunden bei dieser Temperatur gerührt. Nach 20 h war das Dimethylsulfat abreagiert, in der Mischung konnte kein Dimethylsulfat mehr nachgewiesen werden. Das erhaltene Produkt besaß einen Feststoffgehalt von 50,5 %.
A6) Vergleichscopolymerisat (a) 30 g A1 wurde mit 0,65 g Essigsäure versetzt und die Lösung anschließend für 3 h gerührt. Das erhaltene Produkt besaß einen Feststoffgehalt von 49 %.
A7) Imid aus Alkylamin (Vergleich) 122 g einer 50 %igen Lösung eines Maleinsäureanhydrid/C 20,24-Olefin-Copolymeren wurde mit 40,4 g Talgfettamin langsam auf 160°C erwärmt. Unter Stickstoffstrom wurde die Lösung einige Stunden bei dieser Temperatur gerührt und dabei das Kondensationswasser abdestilliert. Nach 4 h betrug die Säurezahl des Produktes 5 mg KOH/g. Im IR-Spektrum war deutlich die Imidbande bei 1700 cm⁻¹ zu erkennen. Das erhaltene Produkt wurde mit 70 g Solvesso 150® verdünnt, so daß der Feststoffgehalt der Lösung 45,5 % betrug.
A8) Monoamid mit sekundärem Amin (Vergleich) 81 g einer 50 %igen Lösung eines Maleinsäureanhydrid/C20,24-Olefin-Copolymeren wurde mit 50,5 g hydriertem Ditalgfettamin langsam auf 120°C erwärmt. Unter Stickstoffstrom wurde die Lösung einige Stunden bei dieser Temperatur gerührt. Nach 4 h betrug die Säurezahl des Produktes 56 mg KOH/g. Die Umsetzung der Anhydridbande bei 1780 cm⁻¹ konnte IR-spektroskopisch verfolgt werden. Das erhaltene Produkt wurde mit 20 g Solvesso® 150 verdünnt, so daß der Feststoffgehalt des Produktes 61 % betrug.

B. Verwendungsbeispiele
Die erfindungsgemäßen Polymermischungen, die Polymermischungen der Vergleichsbeispiele sowie die einzelnen Copolymerisate wurden in einer Reihe von Erdölmitteldestillaten geprüft. Es handelte sich dabei um Dieselkraftstoffe in handelsüblicher deutscher Raffineriequalität; sie werden als DK 1, DK 2, DK 3 und DK 4 bezeichnet:

| | DK 1 | DK 2 | DK 3 | DK 4 |
|---|---|---|---|---|
| Cloud Point CP (°C) | -8 | -5 | -7 | -7 |
| CFPP (°C) | -10 | -8 | -12 | -10 |
| Dichte b. 20°C (g/ml) | 0.831 | 0.838 | 0.817 | 0.832 |
| Siedeanfang (°C) | 175 | 167 | 165 | 172 |
| 20 % Siedepunkt (°C) | 223 | 221 | 201 | 219 |
| 90 % Siedepunkt (°C) | 314 | 328 | 320 | 322 |
| Siedeende (°C) | 352 | 361 | 353 | 355 |

Die Mitteldestillate wurden mit den in den Tabellen angegebenen Mengen der Copolymerisate A1 bis A8 und/oder F1 bei 40°C unter Rühren additiviert und anschließend auf Raumtemperatur abgekühlt.

Die additivierten Mitteldestillate wurden in 500 ml-Glaszylindern in einem Kältebad von Raumtemperatur auf -13°C abgekühlt und 20 Stunden bei dieser Temperatur gelagert. Anschließend wurde visuell Menge und Aussehen der Paraffinphase bestimmt und beurteilt. Von der bei -13°C abgetrennten 20 Vol-%-Bodenphase wurde von jeder Probe der "Cold Filter Plugging Point" (CFPP) nach DIN EN 116 und der "Cloud Point" (CP) nach ASTM D 2500 ermittelt.

In den Tabellen 1 bis 4 sind die Ergebnisse aufgeführt. Ergänzend zur visuellen Beurteilung zeigt die gute Übereinstimmung des CP der 20 Vol-%-Bodenphase mit dem CP des jeweiligen Mitteldestillates, daß bei Verwendung der erfindungsgemäßen Polymermischungen fast immer eine vollständige Dispergierung der n-Paraffine erreicht wurde.

Die Tabellen 2 und 4 zeigen, daß die Komponenten a) und b) der erfindungsgemäßen Polymermischungen allein dagegen keinerlei Dispergierwirkung haben.

Hierdurch wird belegt, daß die sehr gute Dispergierung der n-Paraffine durch die unter Verwendung von Polyaminen hergestellten Maleinsäureamid/α-Olefin-Copolymere (Komponente a) in Kombination mit dem Copolymerisat F1 (Komponente b) bewirkt wird. Im Gegensatz dazu ist außerdem eine Kombination der analogen Imide aus primären Alkylaminen mit F1 oder der Monoamide aus Dialkylaminen mit F1 als Paraffindispergator nahezu unwirksam.

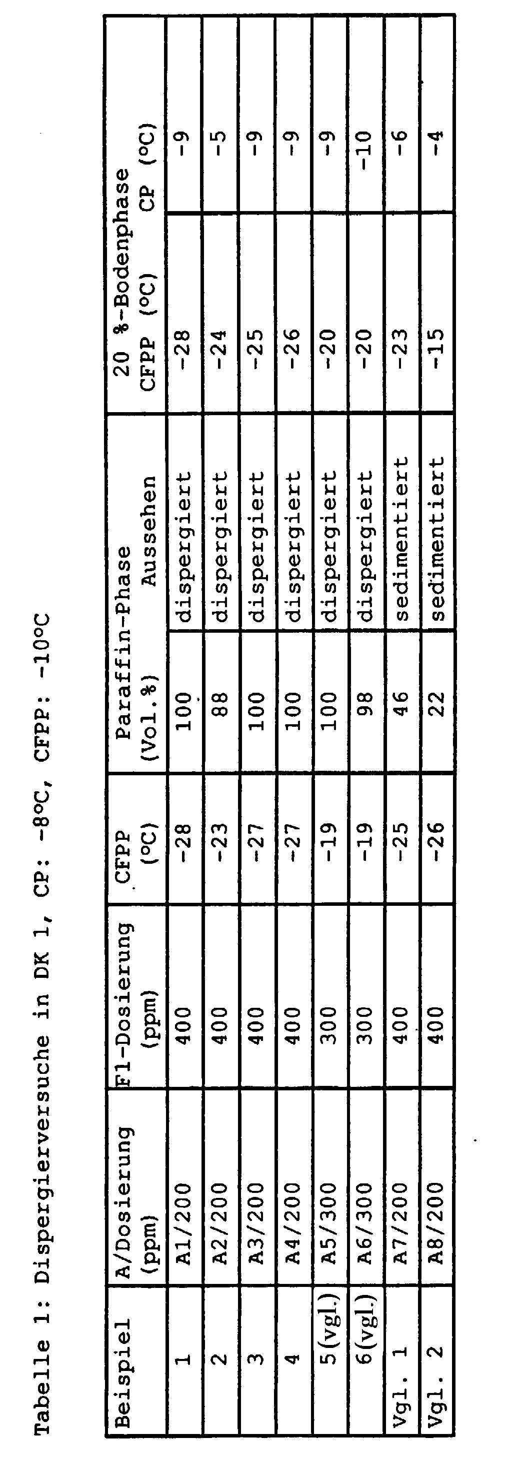

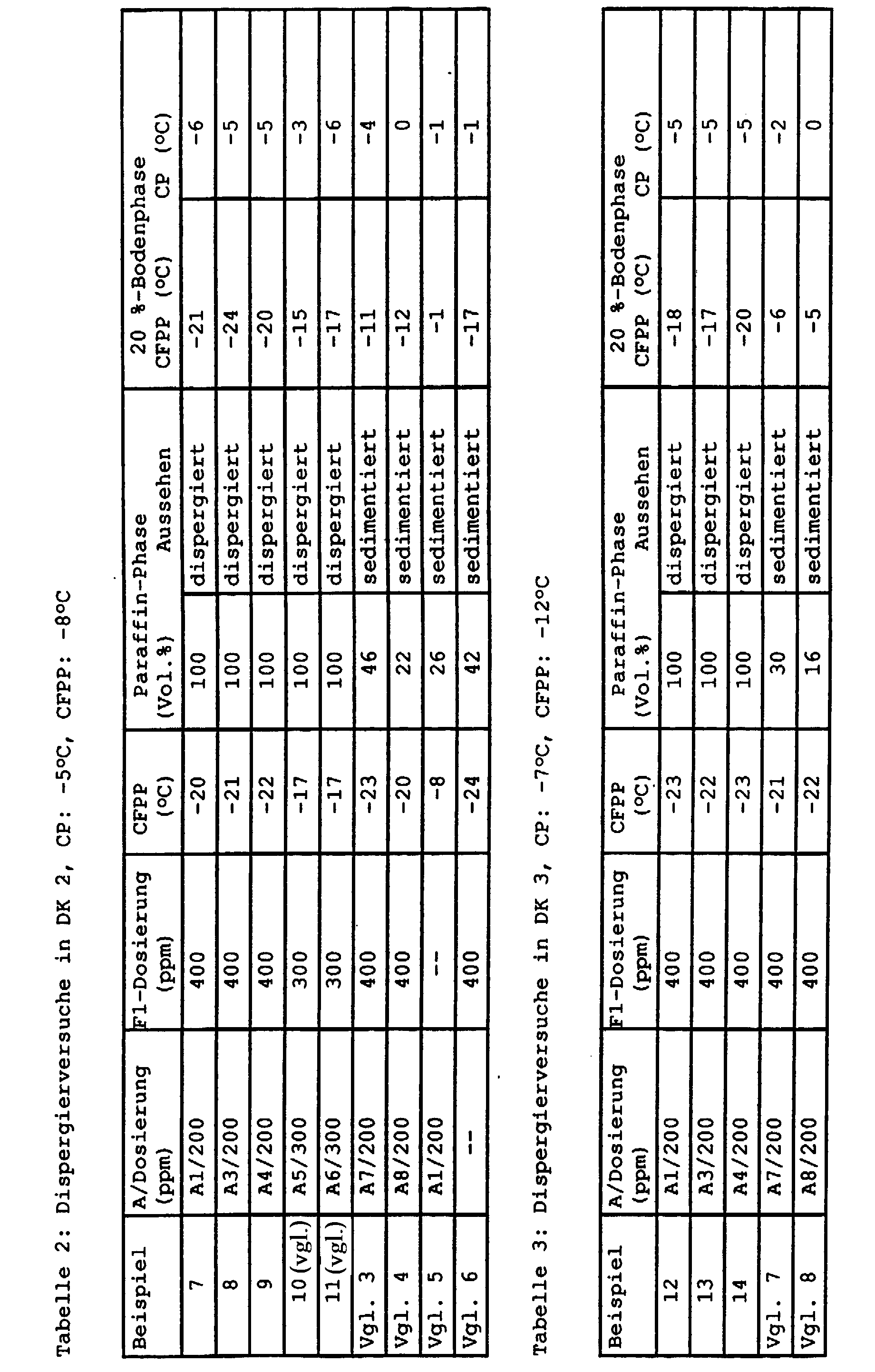

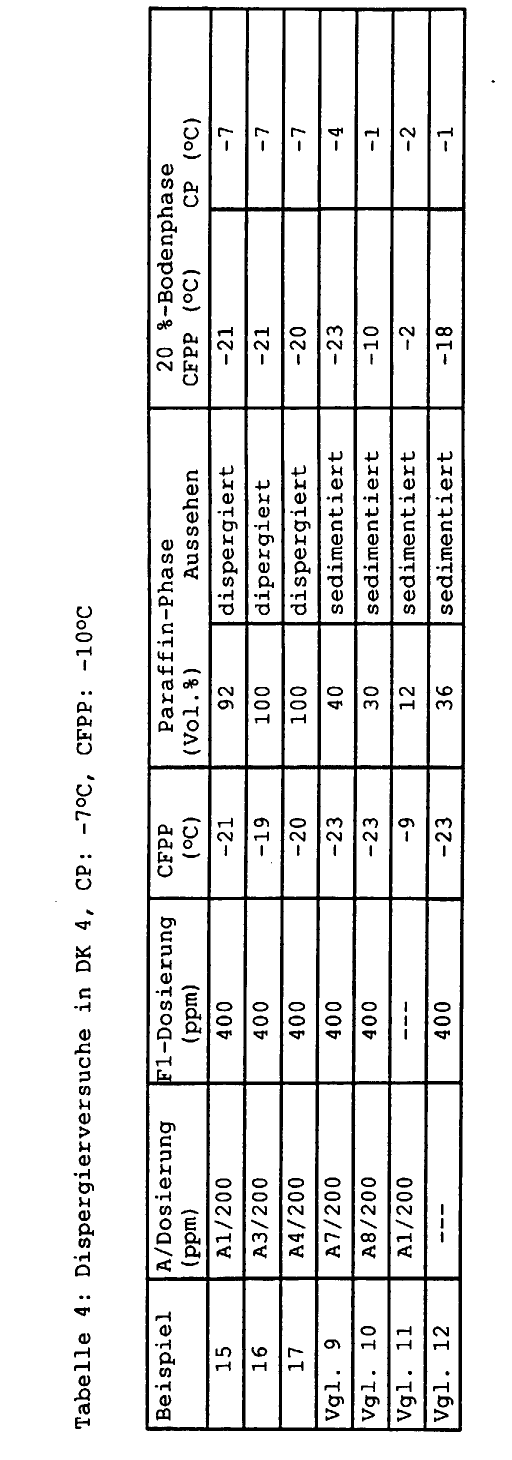

## Patentansprüche

1. Polymermischungen, enthaltend
a) 10 bis 90 Gew.-% eines Imides aus einem Copolymerisat, welches ausschließlich aus einem α-Olefin und einer ethylenisch ungesättigten Dicarbonsäure aufgebaut ist, und einem Polyamin und
b) 10 bis 90 Gew.-% eines von a) verschiedenen Copolymerisats, welches mindestens zwei Monomere aus der Gruppe bestehend aus Ethylen, Acrylestern, Vinylestern, Vinylethern und ethylenisch ungesättigten Dicarbonsäuren oder Dicarbonsäurederivaten enthält.

2. Polymermischungen nach Anspruch 1, dadurch gekennzeichnet, daß als Polyamin ein Amin der Formel I, 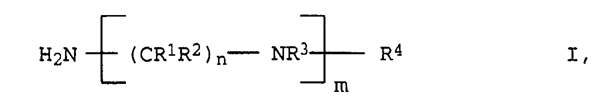 worin
n 1 bis 6;
m 1 bis 3;
R¹ und R² unabhängig voneinander Wasserstoff, Methyl, Ethyl;
R³ Wasserstoff, Alkenyl, Alkyl, Aryl und
R⁴ Wasserstoff, Alkyl, Alkenyl, Aryl, aminhaltiges Alkenyl oder aminhaltiges Alkyl bedeuten, verwendet wird.

3. Polymermischungen nach Anspruch 2, dadurch gekennzeichnet, daß als Polyamin ein Amin der Formel II
R⁴-NH-CH₂-CH₂-CH₂-NH₂ II,
worin R⁴ die Bedeutung Alkyl, Alkenyl, Aryl, aminhaltiges Alkyl, aminhaltiges Alkenyl oder Wasserstoff hat, verwendet wird.

4. Polymermischungen nach einem der Ansprüche 1 bis 3, dadurch gekennzeichnet, daß Komponente a) ein α-Olefin/Maleinsäureimid-Copolymer ist.

5. Polymermischungen nach einem der Ansprüche 1 bis 4, enthaltend 20 bis 75 Gew.-% der Komponente a) und 25 bis 80 Gew.-% der Komponente b).

6. Polymermischungen nach einem der Ansprüche 1 bis 5, dadurch gekennzeichnet, daß als Komponente b) ein Copolymerisat verwendet wird, welches mindestens die Monomeren Ethylen und Vinylester enthält.

7. Polymermischungen nach Anspruch 6, dadurch gekennzeichnet, daß als Komponente b) ein Ethylen/Vinylpropionat-Copolymer verwendet wird.

8. Verwendung der Polymermischungen gemäß einem der Ansprüche 1 bis 7 als Zusatz für Erdölmitteldestillate.

9. Erdölmitteldestillate, enthaltend Polymermischungen gemäß einem der Ansprüche 1 bis 7.

## Claims

1. A polymer blend containing
a) from 10 to 90% by weight of an imide of a copolymer composed exclusively of an α-olefin and of an ethylenically unsaturated dicarboxylic acid and a polyamine and
b) from 10 to 90% by weight of a copolymer which differs from a) and contains at least two monomers selected from the group consisting of ethylene, acrylates, vinyl esters, vinyl ethers and ethylenically unsaturated dicarboxylic acids or dicarboxylic acid derivatives.

2. A polymer blend as claimed in claim 1, wherein the polyamine used is an amine of the formula I 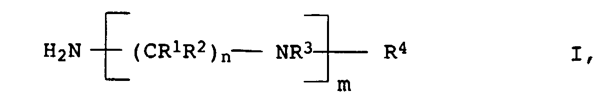 where
n is from 1 to 6;
m is from 1 to 3;
R¹ and R² independently of one another are each hydrogen, methyl or ethyl;
R³ is hydrogen, alkenyl, alkyl or aryl and
R⁴ is hydrogen, alkyl, alkenyl, aryl, amino-containing alkenyl or amino-containing alkyl.

3. A polymer blend as claimed in claim 2, wherein the polyamine used is an amine of the formula II
R⁴-NH-CH₂-CH₂-CH₂-NH₂ II,
where R⁴ is alkyl, alkenyl, aryl, amino-containing alkyl, amino-containing alkenyl or hydrogen.

4. A polymer blend as claimed in any of claims 1 to 3, wherein component a) is an α-olefin/maleimide copolymer.

5. A polymer blend as claimed in any of claims 1 to 4, containing from 20 to 75% by weight of component a) and from 25 to 80% by weight of component b).

6. A polymer blend as claimed in any of claims 1 to 5, wherein a copolymer which contains at least the monomers ethylene and vinyl ester is used as component b).

7. A polymer blend as claimed in claim 6, wherein an ethylene/vinyl propionate copolymer is used as component b).

8. Use of a polymer blend as claimed in any of claims 1 to 7 as an additive for mineral oil middle distillates.

9. A mineral oil distillate containing a polymer blend as claimed in any of claims 1 to 7.

## Revendications

1. Mélanges de polymères contenant
a) 10 à 90% en poids d'un imide d'un copolymère construit exclusivement à partir d'une α-oléfine et d'un acide dicarboxylique à insaturation éthylénique, et d'une polyamine et
b) 10 à 90% en poids d'un copolymère différent de celui de a) contenant au moins deux monomères choisis dans le groupe constitué de l'éthylène, les esters acryliques, les esters vinyliques, les éthers vinyliques et les acides dicarboxyliques à insaturation éthylénique ou les dérivés d'acides dicarboxyliques.

2. Mélanges de polymères selon la revendication 1, caractérisés en ce que l'on utilise, en tant que polyamine, une amine de formule I, 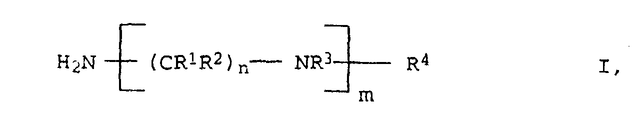 où
n vaut 1 à 6 ;
m vaut 1 à 3 ;
R¹ et R² représentent indépendamment l'un de l'autre, un atome d'hydrogène, un groupement méthyle, éthyle ;
R³ représente un atome d'hydrogène, un groupement alcényle, alkyle, aryle et
R⁴ représente un atome d'hydrogène, un groupement alkyle, alcényle, aryle, alcényle contenant de l'amine ou alkyle contenant de l'amine.

3. Mélanges de polymères selon la revendication 2, caractérisé en ce que l'on utilise, en tant que polyamine, une amine de formule II,
R⁴-NH-CH₂-CH₂-CH₂-NH₂ II,
où R⁴ représente un groupement alkyle, alcényle, aryle, alkyle contenant de l'amine ou alcényle contenant de l'amine ou un atome d'hydrogène.

4. Mélanges de polymères selon l'une quelconque des revendications 1 à 3, caractérisé en ce que le composant a) est un copolymère α-oléfine / maléimide.

5. Mélanges de polymères selon l'une quelconque des revendications 1 à 4, contenant 20 à 75% en poids de composant a) et 25 à 80% en poids de composant b).

6. Mélanges de polymères selon l'une quelconque des revendications 1 à 5, caractérisé en ce que l'on utilise en tant que composant b) un copolymère contenant au moins les monomères éthylène et ester vinylique.

7. Mélanges de polymères selon la revendication 6, caractérisé en ce que l'on utilise en tant que composant b) un copolymère éthylène/propionate de vinyle.

8. Utilisation de mélanges de polymères selon l'une quelconque des revendications 1 à 7 en tant qu'additif pour des distillats moyens du pétrole.

9. Distillats moyens du pétrole contenant des mélanges de polymères selon l'une quelconque des revendications 1 à 7.
